# EUROPÄISCHE PATENTSCHRIFT

(11) **EP 0 392 296 B1**
(45) Veröffentlichungstag und Bekanntmachung des Hinweises auf die Patenterteilung: **09.06.1993**
(21) Anmeldenummer: 90106208.3
(22) Anmeldetag: 31.03.1990
(51) Int. Cl.: B60H 1/00

(54) **Heiz- oder Klimaanlage für den Fahrgastraum von Kraftfahrzeugen**
Heating or air conditioning unit for a vehicle passenger compartment
Dispositif de chauffage ou de climatisation d'un habitacle de véhicule

(30) Priorität: 08.04.1989 DE 3911615
(43) Veröffentlichungstag der Anmeldung: 17.10.1990
(73) Patentinhaber: AUDI AG, 85045 Ingolstadt (DE)
(72) Erfinder: Gode, Fedor, D-8070 Ingolstadt (DE); Helms, Volker, D-3300 Braunschweig (DE)
(74) Vertreter: Geissler, Manfred

(56) Entgegenhaltungen:
- EP-A- 0 212 306
- DE-A- 2 851 178
- DE-A- 3 415 241
- DE-U- 1 964 095
- US-A- 2 860 567

## Beschreibung

Die Erfindung betrifft eine Heiz- oder Klimaanlage für den Fahrgastraum von Kraftfahrzeugen mit den weiteren Merkmalen nach dem Oberbegriff des Patentanspruches 1.

Eine gattungsgemäße Einrichtung ist durch die DE-0S 33 38 768 bekannt geworden. Dabei wird das Ziel verfolgt, daß bei jeder Temperatureinstellung eine gewünschte Temperaturschichtung durch automatische Beimischung von temperierter Luft zur durch eine Luftauslaßdüse strömenden kalten Außenluft erzielt wird, so daß ein zu kalter Luftstrom sich nicht unangenehm bemerkbar machen kann. Es soll dabei auch in der maximalen Stellung eines Temperaturwählers nur soviel warme Luft automatisch der kalten Außenluft beigemischt werden, wie zur Erzielung einer komfortablen Kopfraumtemperatur erforderlich ist.
Diese zur Herbeiführung einer gewünschten Temperaturschichtung vom Ansatz her an sich günstige Gestaltung einer Heiz- und Belüftungseinrichtung, bei der zwei parallel verlaufende, Luft mit unterschiedlicher Temperatur führende Kanäle vorgesehen sind, ist daher auch prinzipiell auf Klimaanlagen für Kraftfahrzeuge anwendbar.

Nachteilig bei der bekannten Einrichtung ist allerdings der relativ hohe bauliche Aufwand für die beiden Kanäle sowie für die sich daran anschließende Mischluftkammer und die schließlich an deren Ende noch einzusetzende Luftauslaßdüse. Auch dürfte der Zusammenbau der einzelnen Bauteile nicht unproblematisch sein, da die Mischluftkammer auf die Enden der beiden Kanäle aufgesetzt werden muß. Darüberhinaus muß die gegenseitige Zuordnung auch noch so exakt sein, damit das düsenseitige Ende der Mischluftkammer einigermaßen problemlos von hinten in die dafür vorgesehene Öffnung in der Armaturentafel eingesetzt werden kann.

Davon ausgehend liegt der Erfindung die Aufgabe zugrunde, die Heiz- und Belüftungseinrichtung nach dem Stand der Technik, deren Prinzip auch auf Klimaanlagen erweiterbar ist, in der Weise weiterzubilden, daß bei einem reduzierten baulichen Aufwand insbesondere auch eine erleichterte Montage möglich ist.

Dies wird erfindungsgemäß mit einer Heiz- oder Klimaanlage erreicht, die nach den weiteren Merkmalen gemäß Kennzeichen des Patentanspruches 1 ausgeführt ist.

Somit läßt sich die Luftauslaßdüse von vorne, d. h. vom Fahrgastraum aus in die Armaturentafel einsetzen und mit den beiden Kanälen verbinden.

Wird die erfindungsgemäße Heiz- oder Klimaanlage noch um die vorteilhaften Weiterbildungen, wie sie sich aus den Unteransprüchen ergeben, ergänzt, so bieten sich weitere Vorteile.

Mit der Weiterbildung nach Patentanspruch 2, wonach zum Einstellen der Gesamtluftmenge eine Absperrklappe an der Luftauslaßdüse angebracht bzw. in diese integriert ist, ist eine weitgehende Vormontage möglich, wobei die Bauteile bereits optimal zueinander eingestellt bzw. justiert werden können. Wird darüber hinaus noch mindestens eine Verteilklappe (Segmentklappe) in die Luftauslaßdüse integriert, über die die Kanäle separat zu öffnen oder zu schließen sind, so ist damit auch die (stufenlose) Mischung von warmer und kalter Luft in die Luftauslaßdüse verlagert und erfolgt nicht, wie im Stand der Technik bekannt, im Heizungsgehäuse bzw. in gehäusenahen Bereichen.

Mit der Maßnahme nach Patentanspruch 3 können aufwendige Übertragungsmittel zur Verbindung mit den Betätigungselementen, wie beispielsweise Bowdenzüge, Gestänge usw., gänzlich entfallen.
Werden schließlich die beiden zur Mischluftkammer, d. h. zur Luftauslaßdüse führenden Kanäle als längsgeteilter, zumindest im mittleren Bereich elastischer Schlauch ausgeführt, wie dies in Patentanspruch 4 dargelegt ist, so ergibt sich neben der erleichterten Anpassung der Bauteile eine zusätzliche geräusch- und schwingungsdämpfende Wirkung.

Ein Ausführungsbeispiel der Erfindung ist nachstehend beschrieben und in der zugehörigen Zeichnung dargestellt.

Diese zeigt zunächst schematisiert und in dicker Vollinie ein Gehäuse einer erfindungsgemäß ausgeführten Heiz- oder Klimaanlage.

Im Bereich einer Lufteintrittsöffnung 2 ist eine erste Temperierklappe 3 vorgesehen, über die bereits eingangsseitig die Luftmenge einstellbar ist, die durch einen vom Kühlwasser des Fahrzeugmotors durchflossenen Wärmetauscher 4 hindurchströmen und dabei erwärmt werden soll.
Oberhalb des Wärmetauschers 4 erstreckt sich, durch eine Gehäusewand 5 von den übrigen Baueinheiten des Gehäuses 1 getrennt, ein separater Frischluftkanal 6 von der ersten Temperierklappe 3 bis zum Gehäuseausgang 15.

Innerhalb des Gehäuses 1 sind weitere Turbulenz-, Misch- und Absperrklappen 7 - 9 vorgesehen und Luftführungskanälen 10,11 zur Versorgung von Luftauslaßdüsen im Fußbereich und Scheibenbereich des Kraftfahrzeuges zugeordnet, wobei die diesen zugeführte Luft nach Wunsch temperiert werden kann.

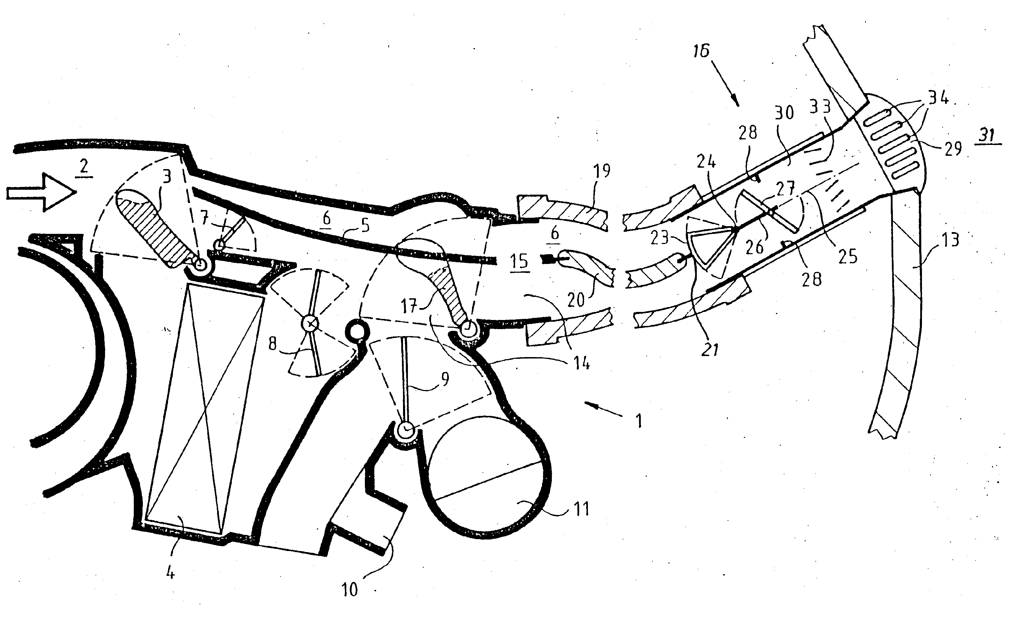

Dadurch wird auch ein Mischluftkanal 14 gebildet, der, lediglich durch die Gehäusewand 5 vom Frischluftkanal 6 getrennt, mit diesem einen Gehäuseausgang 15 bildet, über den in einer Armaturentafel 13 vorgesehene Luftauslaßdüsen 16 (in der Figur ist nur eine einzige gezeigt) beaufschlagt werden können. Der Mischluftkanal 14 ist darüberhinaus am Gehäuseausgang 15 mittels einer Zentralklappe 17 verschließbar (wenn Heiz- oder Klimaanlage auf Defrosterwirkung schaltet), die aber den Frischluftkanal 6 nicht beinflußt.

Die Zentralklappe 17 wird insbesondere dann geschlossen, wenn zum Zwecke der Scheibendefrostung die gesamte verfügbare Warmluft den entsprechenden Defrosterdüsen zugeleitet werden soll.

Frischluftkanal 6 und Mischluftkanal 14 münden am Gehäuseausgang 15 in einen Verbindungskanal 19, der sich bis zur Luftauslaßdüse 16 erstreckt und aus elastischem, schlauchförmigem Material hergestellt ist, so daß sich dadurch eine zusätzliche geräusch- und schwingungsdämpfende Wirkung ergibt. Die Endbereiche sollten allerdings ausgesteift sein, um das Aufsetzen auf den Gehäuseausgang 15 bzw. das Einsetzen der Luftauslaßdüse 16 zu erleichtern. Aufgrund einer innerhalb des Verbindungskanales 19 vorgesehenen Trennwand 20 setzen sich Außenluftkanal 6 und Mischluftkanal 14 bis in den Bereich der Luftauslaßdüse 16 fort.

Um jeder einzelnen an der Armaturentafel 13 vorgesehenen Luftauslaßdüse 16 einen Verbindungskanal 19 zuordnen zu können, wäre beispielsweise am Gehäuseausgang 15 eine entsprechende Verzweigung vorzusehen.

Im Einmündungsbereich des Verbindungskanales 19 in die als langgestreckte Einschubeinheit ausgeführte Luftauslaßdüse 16 ist in diese eine schwenkbar gelagerte, als Segmentklappe 23 ausgeführte Temperierklappe in eine Aussparung 21 einer Trennwand 26 eingesetzt. Sie reicht dabei über die gesamte Breite der Luftauslaßdüse 16, wobei ihre Schwenkachse 24 die Längsachse 25 der Luftauslaßdüse 16 rechtwinklig schneidet.
Je nach der mittels geeigneter Betätigungselemente eingestellten Position der Segmentklappe 23 (siehe gestrichelt dargestellte Anschlagpositionen) kann erreicht werden, daß neben jeder gewünschten Zwischenstellung einmal der Frischluftkanal 6 und zum anderen der Mischluftkanal 14 vollständig geschlossen sind. Somit ist es auf besonders einfacher Weise möglich, jede einzelne Luftauslaßdüse 16 hinsichtlich ihrer Temperaturführung individuell zu steuern, sofern an sie nur ein zweigeteilter Kanal (Frischluft- u. Mischluftkanal) herangeführt wird. Anstelle der Segmentklappe 23 wäre auch denkbar, jedem der beiden Kanäle eine separate Absperrklappe zuzuordnen und in die Luftauslaßdüse 16 einzusetzen.

In Luftströmungsrichtung nach der Segmentklappe 23 ist durch die o. g. Trennwand 26, auf der auch die Schwenkachse 24 der Segmentklappe 23 zuliegen kommt, sichergestellt, daß sich der Frischluftkanal 6 und der Mischluftkanal 14 bis zu einer Absperrklappe 27 fortsetzen, über die, wie im Stand der Technik bekannt, beide Kanäle gleichzeitig sowohl zu öffnen als auch zu verschließen sind. Geeignete Anlageflächen 28 an der Wandung der Luftauslaßdüse 16 begünstigen die dichtende Anlage der Absperrklappe 27 in ihrer geschlossenen Stellung. Sie befindet sich dabei in einem zum Vermischen zweier Luftströme notwendigen Abstand vor der eigentlichen, in den Fahrgastraum 31 weisende Düsenöffnung 29, so daß der dazwischenliegende Raum eine Mischluftkammer 30 bildet. Zur Unterstützung der Mischung (wobei ggf. eine gewisse Temperaturschichtung noch erhalten bleiben könnte) der Luftströme ist innerhalb dieser Mischluftkammer 30 ein Turbulator 33 vorgesehen. Die Düsenöffnung 29 ist überdies mit einer Anzahl parallel zueinander verlaufender Lamellen 34 bestückt, über die die Richtung des Luftstromes einstellbar ist.

Über geeignete, hier nicht näher gezeigte und beschriebene Betätigungsmittel (Stellhebel, Stellrad) können die Lamellen 34, die Absperrklappe 27 und die Segmentklappe 23 betätigt werden, so daß damit jeweils eine separate Einstellung von Lufttemperatur, Luftmenge und deren Richtung herbeigeführt werden kann. Die dafür erforderlichen Übertragungsmittel (z. B. Hebel) sind hier der Einfachheit und Übersichtlichkeit halber nicht gezeigt, im Stand der Technik aber hinlänglich bekannt. Die vorstehend erwähnten Betätigungsmittel könnten, wie dies beispielsweise in der DE-0S 36 10 188 vorgeschlagen wird, allesamt innerhalb und/oder am Randbereich der Düsenöffnungen vorgesehen werden.

## Patentansprüche

1. Heiz- oder Klimaanlage für den Fahrgastraum (31) von Kraftfahrzeugen mit zwei, Luft von unterschiedlicher Temperatur führenden Kanälen (6,14), die beide in eine Mischluftkammer (30) münden, die Teil einer zur Belüftung des Fahrgastraumes (31) dienenden Luftauslaßdüse (16) ist, dadurch gekennzeichnet, daß die Luftauslaßdüse (16) als vom Fahrgastraum (31) einsetzbare langgestrekte Einschubeinheit ausgebildet ist.

2. Heiz- oder Klimaanlage, nach Patentanspruch 1, **dadurch gekennzeichnet**, daß eine Absperrklappe (27) zum Einstellen der Gesamtluftmenge (Mischluft) sowie zusätzlich mindestens eine Verteilklappe (Segmentklappe 23) zum wechselseitigem Einstellen der Öffnungen beider Kanäle (6,14) innerhalb der Luftauslaßdüse (16) angeordnet und gelagert sind.

3. Heiz- oder Klimaanlage nach Patentanspruch 2, **dadurch gekennzeichnet**, daß Betätigungsmittel (Stellhebel, Stellrad) und Übertragungsmittel (Hebel) zum Betätigen der Klappen (23, 27) innerhalb oder am Randbereich einer Düsenöffnung (29) der Luftauslaßdüse (16) angebracht sind.

4. Heiz- oder Klimaanlage nach Patentanspruch 1, **dadurch gekennzeichnet**, daß die beiden Kanäle (6,14) von einem elastischen, längsgeteilten und in seinen Endbereichen ausgesteiften Verbindungskanal (19) gebildet werden, der mit dem Gehäuse (1) der Heiz- oder Klimaanlage und mit der Luftauslaßdüse (16) gekoppelt ist.

## Claims

1. Heating or air conditioning system for the passenger compartment (31) of motor vehicles, having two ducts (6, 14) which carry air at different temperatures and both of which open out into an air mix chamber (30) which is part of an air outlet nozzle (16) used to ventilate the passenger compartment (31),
characterised in that the air outlet nozzle (16) is in the form of an elongated push-in module which can be inserted from the passenger compartment (31).

2. Heating or air conditioning system according to clam 1, characterised in that a shut-off flap (27) for setting the overall amount of air (mixed air) and in addition at least one distribution flap (segmental flap 23) for alternatively setting the openings of the two ducts (6, 14) are disposed and mounted inside the air outlet nozzle (16).

3. Heating or air conditioning system according to claim 2, characterised in that actuating means (control lever, control wheel) and transmission means (lever) for operating the flaps (23, 27) are mounted inside or at the periphery of a nozzle opening (29) of the air outlet nozzle (16).

4. Heating or air conditioning system according to claim 1, characterised in that the two ducts (6, 14) are constituted by an elastic, longitudinally divided connecting duct (19) with reinforced and portions, which is coupled to the housing (1) of the heating or air conditioning system and to the air outlet nozzle (16).

## Revendications

1. Installation de chauffage ou de climatisation pour le compartiment des passagers de véhicules automobiles, comportant deux conduits (6, 14) qui guident de l'air à des températures différentes et qui débouchent l'un et l'autre dans une chambre de mélange d'air (30) qui fait partie d'un diffuseur de sortie d'air (16) servant à l'aération du compartiment des passagers (31), caractérisée en ce que le diffuseur de sortie d'air (16) est réalisé sous forme d'un ensemble insérable allongé qui peut âtre mis en place par le compartiment des passagers (31).

2. Installation de chauffage ou de climatisation selon la revendication 1, caractérisée en ce qu'un clapet d'arrêt (27) pour le réglage de la quantité totale d'air (air mélangé) et, en plus, au moins un clapet de répartition (clapet en forme de secteur 23) pour le réglage proportionnel réciproque des ouvertures des deux conduits (6, 14) sont disposés et montés à rotation à l'intérieur du diffuseur de sortie d'air (16).

3. Installation de chauffage ou de climatisation selon la revendication 2, caractérisée en ce que des moyens de commande (levier de manoeuvre, molette de manoeuvre) et des moyens de transmission (leviers) pour la manoeuvre des clapets (23, 27) sont logés à l'intérieur ou dans la région bordante d'une ouverture (29) du diffuseur de sortie d'air (16).

4. Installation de chauffage ou de climatisation selon la revendication 1, caractérisée en ce que les deux conduits (6, 14) sont formés par un manchon de raccordement élastique (19) qui est divisé longitudinalement et est rigidifié dans ses parties d'extrémité et qui est accouplé au carter (1) de l'installation de chauffage ou de climatisation et au diffuseur de sortie d'air (16).
